## Europäisches Patentamt

## European Patent Office

## Office européen des brevets

(11) Veröffentlichungsnummer : **0 165 463**
**B1**

(12) **EUROPÄISCHE PATENTSCHRIFT**

(45) Veröffentlichungstag der Patentschrift :
15.03.89

(51) Int. Cl.⁴ : **F 16 L 33/22, F 16 L 47/04**

(21) Anmeldenummer : **85105931.1**

(22) Anmeldetag : **14.05.85**

(54) Anordnung einer Schlauchhülse an einem Kanalkörper eines Fluidaggregates.

(30) Priorität : 09.06.84 DE 3421604

(43) Veröffentlichungstag der Anmeldung :
27.12.85 Patentblatt 85/52

(45) Bekanntmachung des Hinweises auf die Patenterteilung : 15.03.89 Patentblatt 89/11

(84) Benannte Vertragsstaaten :
DE FR GB IT SE

(56) Entgegenhaltungen :
EP--A-- 0 090 545
FR--A-- 1 269 777
FR--A-- 2 452 657
US--A-- 3 025 086

(73) Patentinhaber : **Mannesmann Kienzle GmbH**
**Heinrich-Hertz-Strasse**
**D-7730 Villingen-Schwenningen (DE)**

(72) Erfinder : **Kelch, Heinz**
**Holzwiese 28**
**D-7744 Königsfeld 5 (DE)**

Jouve, 18, rue St-Denis, 75001 Paris, France

**Beschreibung**

Die Erfindung betrifft eine Anordnung einer Schlauchhülse an einem Kanalkörper eines Fluidaggregates mit einer in dem Kanalkörper kanalkonzentrisch ausgebildeten, zylindrischen Senkung und einem in der Senkung befindlichen Innengewinde, mit welchem eine der Schlauchhülse zugeordnete Hohlschraube verbindbar ist.

Bei den bisher üblichen, im folgenden als Schlauchanschlüsse bezeichneten Verbindungsmitteln zwischen festen und flexiblen Kanälen von Flüssigkeitskreisläufen besteht die Gefahr, daß sie, wenn ihre Montage nicht mit äußerster Sorgfalt erfolgt, Störungsquellen darstellen, die in vielen Fällen nicht rechtzeitig als solche erkannt werden. Dies gilt insbesondere für Anwendungsfälle mit extrem rauhen Betriebsbedingungen, d. h. erheblichen Betriebstemperaturschwankungen und davon abhängig Viskositätsänderungen des strömenden Mediums, aber auch von außen einwirkende Erschütterungen sowie Druckstöße innerhalb des Kanalsystems, wie sie beispielsweise bei Kraftfahrzeugen, Bau- und Landmaschinen gegeben sind.

Verständlicherweise ist gerade bei dem genannten Anwendungssektor durch Wartungseingriffe, Testläufe oder den Austausch von Fluidaggregaten ein relativ häufiges Trennen und Wiederverbinden der jeweiligen Schlauchanschlüsse erforderlich, dies aber bei vielfach schlechter Zugänglichkeit und einem Milieu mit einem ungewöhnlich hohen Verschmutzungsgrad.

Ein erstes Schlauchanschlußprinzip, das unter den geschilderten Bedingungen angewandt werden kann, sieht vor, die dem anzuschließenden Schlauch als Sitz dienende Schlauchhülse untrennbar, beispielsweise durch Verlöten, mit dem betreffenden Fluidaggregat zu verbinden, das Schlauchende bei der Endmontage aufzupressen und gegebenenfalls mittels einer Schlauchklemme zusätzlich zu sichern. Diese Lösung hat zwar den Vorzug, daß die Schlauchhülse unverlierbar einem festen Kanal zugeordnet ist, fertigungstechnisch ist, abgesehen davon, daß ein sperriges Fluidaggregat entsteht, diese Befestigung jedoch aufwendig und bedingt, daß am Einbauort für das Anbringen eines Schlauches ausreichend Raum gegeben ist. Darüber hinaus ist ein Trennen dieser Verbindung nicht nur umständlich, sondern ohne Zerstörung des im allgemeinen satt auf der Schlauchhülse aufgepreßten Schlauchendes praktisch nicht möglich.

Ein anderes Schlauchanschlußprinzip sieht eine mit dem Fluidaggregat verbindbare Hohlschraube vor, deren Schaft und deren im Schaft befindlichen radialen Öffnungen ein die Schlauchhülse tragender Hohlring zugeordnet ist. Ferner werden bei dieser Lösung zwei vorzugsweise metallische Dichtungsringe erforderlich, die bei der Montage beiderseits des Hohlringes auf dem Schaft der Hohlschraube anzuordnen sind. Zweifellos ist mit dieser Lösung der Vorteil gegeben, die Schlauchhülse abseits des Einbauortes mit einem Schlauchende zu verbinden. Daß der Schlauchanschluß aber aus mehreren, leicht verlierbaren Bauteilen erst am Einbauort zusammengefügt werden muß, macht dessen Montage äußerst umständlich und erhöht, zumal vier Spalte zu dichten sind, die Gefahr, daß beispielsweise, wenn ein Bauteil heruntergefallen und nicht mehr sorgfältig gereinigt worden ist, Störungen auftreten. Außerdem muß, um eine optimale Dichtwirkung zu erzielen, eine derartige Verbindung mit einem das Anzugsmoment begrenzenden Werkzeug montiert werden, was, abgesehen davon, daß bei wiederholtem Trennen und Verbinden des Schlauchanschlusses jeweils neue Dichtscheiben verwendet werden müssen, bei Reparaturen vielfach unterlassen wird. Falls dadurch Leckstellen entstehen oder bei Unterdruck in dem betreffenden Flüssigkeitskreislauf Luft angesaugt wird, können, beispielsweise wenn es sich um den Einspritskreislauf eines Dieselmotors handelt, erhebliche Störungen eintreten. Der vorstehend geschilderte Stand der Technik ist beispielsweise in der DE-A-30 28 038 dargestellt.

Ziel der vorliegenden Erfindung war es daher, einen Schlauchanschluß zu schaffen, der auch bei ungünstigen Einbausituationen eine vereinfachte und weniger Sorgfalt erfordernde Montage gestattet, dennoch aber die aufgezeigten Störquellen weitgehend vermeidet und eine verläßliche Funktion bietet.

Die erfindungsgemäße Lösung sieht vor, daß die Schlauchhülse derart gestuft ausgebildet ist, daß sich, ausgehend von der dem schlauchseitigen Ende abgewandten Stirnseite der Schlauchhülse, einem zylindrischen Abschnitt größeren Durchmessers ein zylindrischer Abschnitt kleineren Durchmessers anschließt, daß am Umfang des zylindrischen Abschnitts größeren Durchmessers ein Dichtungsring angeordnet ist, während der zylindrische Abschnitt kleineren Durchmessers der Hohlschraube als Lagerung dient und daß beim Einschrauben der Holschraube in das Innengewinde die Hohlschraube stirnseitig auf den Dichtungsring einwirkt und, indem sich die Schlauchhülse an der Grundfläche der kanalkonzentrischen Senkung abstützt, die radiale Ringfläche zwischen den zylindrischen Abschnitten der Schlauchhülse die Bewegung der Hohlschraube begrenzt.

Die weitere vorteilhafte Ausgestaltung der Erfindung geht aus den Unteransprüchen hervor.

Mit der gefundenen konstruktiven Gestaltung für einen Schlauchanschluß sind, was einen entscheidenden Vorzug darstellt, einerseits die Dichtstellen reduziert, andererseits durch die Begrenzung des Kompressionshubes und somit des auf die Dichtung einwirkenden Momentes eine Wiederverwendbarkeit der Dichtung und somit des gesamten Schlauchanschlusses geschaffen. Ferner läßt sich, was für Testzwecke von Vorteil ist, mit dem erfindungsgemäßen Schlauchanschluß auch bereits durch Anziehen von Hand eine ausreichende Dichtwirkung erzielen. Dabei stellt der erfindungsgemäße Schlauchanschluß eine gut handhabbare und als handelsfähige Baugruppe herstellbare Montageeinheit dar. Die Verringerung der Störanfälligkeit und die Montagefreundlichkeit beeinflussen verständlicherweise auch die Bereitschaft, Fluidaggregate, die nicht zwingend für den Betrieb eines Kraftfahrzeuges erforderlich sind, beispielsweise Wärmetauscher oder Mengenmesser, in einem Kraftfahrzeug zu installieren. Auch sei noch erwähnt, daß der erfindungsgemäße Schlauchanschluß der Forderung nach möglichst wirbelfreier Strömung gerecht wird und bei entsprechender Ansenkung der Schlauchhülse als Bauteil eines Kugelventils Anwendung finden kann.

Im folgenden sei die Erfindung anhand der beigefügten Zeichnungen näher erläutert. Es zeigen

Fig. 1 ein Schnittbild des erfindungsgemäßen, als handelsfähige Baueinheit vormontierten Schlauchanschlusses,

Fig. 2 ein Schnittbild des Schlauchanschlusses gemäß Fig. 1 in einem montierten Zustand.

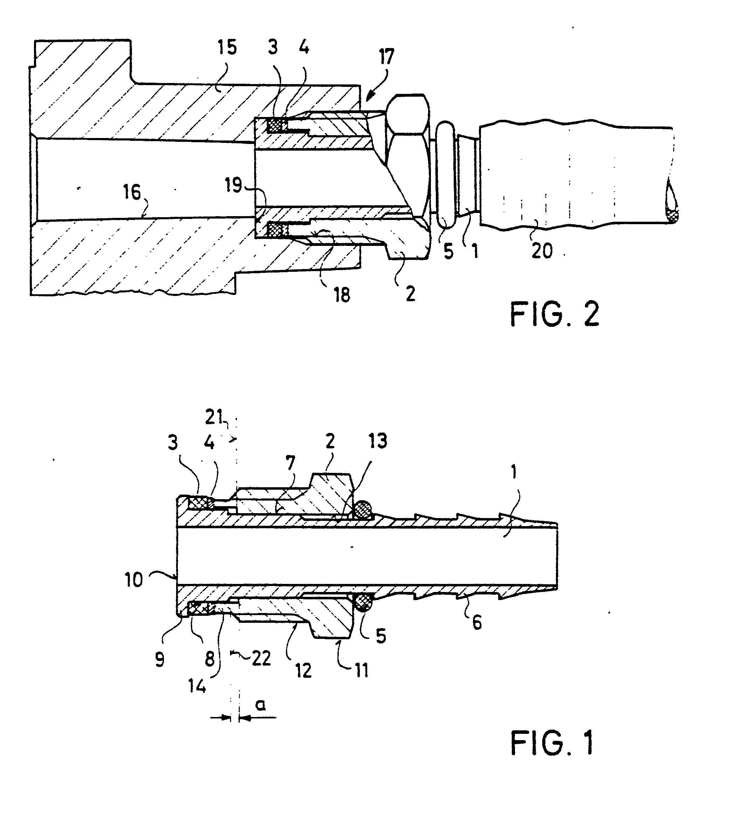

Wie Fig. 1 zeigt, besteht der erfindungsgemäße Schlauchanschluß aus einer Schlauchhülse 1, einer auf der Schlauchhülse 1 gelagerten Hohlschraube 2, einem Dichtungsring 3 und einer Gleitscheibe 4. Ein auf die Schlauchhülse 1 aufgerollter O-Ring dient der axialen Sicherung der Hohlschraube 2 auf der Schlauchhülse 1 und der Schaffung einer Bau- bzw. Montageeinheit. Wie ferner ersichtlich ist, sind an der Schlauchhülse 1 mehrere einem aufzupressenden Schlauchende zugeordnete Aufgleit- und Haltekonen 6, zwei zylindrische Abschnitte unterschiedlichen Durchmesser 7 und 8 sowie ein Flansch 9, der die eine Stirnseite 10 der Schlauchhülse 1 bildet, angeformt. Die mit einem Sechskant 11 und einem Feingewinde 12 versehene Hohlschraube 2 ist mit ihrer Bohrung 13 auf dem Zylinderabschnitt kleineren Durchmessers 7 der Schlauchhülse 1 drehbar gelagert, während der Dichtungsring 3, dem der Flansch 9 in der einen axialen Richtung als Stütze dient, mit einer gewissen Vorspannung auf dem zylindrischen Ansatz 8 angeordnet ist. Ein an der Hohlschraube 2 durch Aufsenken der Bohrung 13 ausgebildeter ringförmiger Ansatz 14 kann, weil sein Innendurchmesser um ein geringes Maß größer ist als derjenige des zylindrischen Ansatzes 8 der Schlauchhülse 1, wie dargestellt, den zylindrischen Ansatz 8 übergreifen und auf die zwischen Dichtring 3 und Hohlschraube 2 eingefügt Gleitscheibe 4 einwirken.

Wie Fig. 2 zeigt, ist in einem Kanalkörper 15 eines Fluidaggregates konzentrisch zu einem Kanal 16 eine Senkung 17 ausgebildet, deren zylindrische Wandung 18 teils ein dem Gewinde 12 der Hohlschraube 2 entsprechendes Innengewinde trägt, teils als eine dem Dichtring 3 zugeordnete Dichtfläche ausgebildet ist, während die ringförmige Grundfläche 19 der Senkung 17 der Schlauchhülse 1 als Angschlagfläche dient. Wird nun der auf einen Schlauch 20 aufgepreßte Schlauchanschluß an dem Kanalkörper 15 befestigt, so läßt sich, wobei sich die Schlauchhülse 1 an der Grundfläche 19 der Senkung 17 abstützt, die Hohlschraube 2, was eine wesentliche Funktion der gefundenen Lösung darstellt, nur so weit in den Kanalkörper 15 eindrehen, bis der in Fig. 1 mit a bezeichnete Abstand Null ist, d. h. die Ringfläche 21 zwischen der Bohrung 13 und dem Ansatz 14 an der zwischen den Ansätzen 7 und 8 der Schlauchhülse 1 bestehenden Ringfläche 22 anschlägt.

Wird die Breite des Dichtringes 3 größer gewählt als die Länge des Ansatzes 8 der Schlauchhülse 1, so könnte eine Fertigungsvereinfachung dadurch erzielt werden, daß sowohl auf den an der Schlauchhülse ausgebildeten Flansch 9 als auch auf eine gestufte Bohrung in der Hohlschraube 2 verzichtet wird.

## Patentansprüche

1. Anordnung einer Schlauchhülse an einem Kanalkörper eines Fluidaggregates mit einer in dem Kanalkörper kanalkonzentrisch ausgebildeten, zylindrischen Senkung und einem in der Senkung befindlichen Innengewinde, mit welchem eine der Schlauchhülse zugeordnete Hohlschraube verbindbar ist, dadurch gekennzeichnet, daß die Schlauchhülse (1) derart gestuft ausgebildet ist, daß sich, ausgehend von der dem schlauchseitigen Ende abgewandten Stirnseite der Schlauchhülse (1), einem zylindrischen Abschnitt größeren Durchmessers (8) ein zylindrischer Abschnitt kleineren Durchmessers (7) anschließt, daß am Umfang des zylindrischen Abschnitts größeren Durchmessers (8) ein Dichtungsring (3) angeordnet ist, während der zylindrische Abschnitt kleineren Durchmessers (7) der Hohlschraube (2) als Lagerung dient und daß beim Einschrauben der Hohlschraube (2) in das Innengewinde die Hohlschraube (2) stirnseitig auf den Dichtungsring (3) einwirkt und, indem sich die Schlauchhülse (1) an der Grundfläche (19) der kanalkonzentrischen Senkung (17) abstützt, die radiale Ringfläche (22) zwischen den zylindrischen Abschnitten (7 und 8) der Schlauchhülse (1) die Bewegung der Hohlschraube (2) begrenzt.

2. Anordnung nach Anspruch 1, dadurch gekennzeichnet, daß die eine Stirnfläche (10) der Schlauchhülse (1) durch einen Flansch (9) gebildet ist, dessen Durchmesser größer ist als der Durchmesser des sich anschließenden, dem Dichtungsring (3) zugeordneten zylindrischen Abschnitts (8) und kleiner ist als der Durchmesser einer in dem Kanalkörper (15) kanalkonzentrisch ausgebildeten zylindrischen Senkung (17).

3. Anordnung nach Anspruch 1, dadurch gekennzeichnet, daß an der Hohlschraube (2) ein ringförmiger Ansatz (14) ausgebildet ist, dessen Innendurchmesser um ein geringes Maß größer ist als derjenige des an der Schlauchhülse (1) ausgebildeten zylindrischen Ansatzes größeren Durchmessers (8) und dessen Außendurchmesser kleiner ist als der Durchmesser der kanalkonzentrischen Senkung (17).

4. Anordnung nach Anspruch 1 bis 3, dadurch gekennzeichnet, daß sie als eine aus Schlauchhülse (1), Dichtungsring (3) und Hohlschraube (2) sowie einer zwischen Dichtungsring (3) und Hohlschraube (2) eingefügten Gleitscheibe (4) bestehende und mittels eines auf die Schlauchhülse (1) aufgerollten O-Ringes (5) zusammengehaltenen Montageeinheit ausbildbar ist.

## Claims

1. Arrangement of a tubular sleeve on a channel body of a fluid unit, having a cylindrical counterbore constructed in the channel body concentrically to the channel an in the counterbore an internal thread to which a hollow screw associated with the tubular sleeve can be connected, characterised in that the tubular sleeve (1) is of a stepped construction such that, starting from the end face of the tubular sleeve (1) remote from the end on the tube side, a cylindrical section of smaller diameter (7) adjoins a cylindrical section of larger diameter (8), in that a sealing ring (3) is arranged on the periphery of the cylindrical section of larger diameter (8), while the cylindrical section of smaller diameter (7) serves as a mounting for the hollow screw (2), and in that when the hollow screw (2) is screwed into the internal thread the end face of the hollow screw (2) acts on the sealing ring (3) and, while the tubular sleeve (1) abuts against the base (19) of the counterbore (17) concentric to the channel, the radial annular face (22) between the cylindrical sections (7 and 8) of the tubular sleeve (1) limits motion of the hollow screw (2).

2. Arrangement according to Claim 1, characterised in that one end face (10) of the tubular sleeve (1) is formed by a flange (9) whereof the diameter is larger than the diameter of the adjoining cylindrical section (8) associated with the sealing ring (3) and is smaller than the diameter of a cylindrical counterbore (17) constructed in the channel body (15) concentrically to the channel.

3. Arrangement according to Claim 1, characterised in that there is constructed on the hollow screw (2) an annular extension (14), whereof the internal diameter is slightly larger than that of the cylindrical extension of larger diameter (8) constructed on the tubular sleeve (1) and whereof the external diameter is smaller than the diameter of the counterbore (17) concentric to the channel.

4. Arrangement according to Claim 1 to 3, characterised in that it can be constructed as an assembly unit which comprises the tubular sleeve (1), the sealing ring (3) and the hollow screw (2) and a sliding disc (4) inserted between the sealing ring (3) and the hollow screw (2), and which is held together by means of an O-ring (5) rolled onto the tubular sleeve (1).

## Revendications

1. Disposition d'un manchon à tuyau flexible sur un élément de conduit d'un groupe hydraulique avec un logement cylindrique formé de façon concentrique au conduit dans un élément de conduit et un filet intérieur pratiqué dans ledit logement qui permet de raccorder un boulon creux fileté associé au manchon à tuyau flexible, caractérisée par le fait que le manchon à tuyau flexible (1) est réalisé d'une manière graduée telle que, en partant de la face frontale du manchon à tuyau (1) opposée à l'extrémité du tuyau flexible, un segment cylindrique de grand diamètre (8) est suivi d'un segment cylindrique de petit diamètre (7), que, sur le pourtour du segment cylindrique de grand diamètre (8) est disposée une bague d'étanchéité (3) alors que le segment cylindrique de petit diamètre (7) sert de logement au boulon creux fileté (2) et que, lors du vissage du boulon creux fileté (2) dans le filet intérieur, ledit boulon creux fileté (2) agit frontalement sur la bague d'étanchéité (3) et, du fait que le manchon à tuyau flexible (1) s'appuie sur la surface de base (19) du logement concentrique au conduit (17), la surface annulaire radiale (22) limite le mouvement du boulon creux fileté (2) entre les segments cylindriques (7 et 8) du manchon à tuyau flexible.

2. Disposition selon la revendication 1, caractérisée par le fait que l'une des faces frontales (10) du manchon à tuyau flexible (1) est formée par une bride (9) dont le diamètre est supérieur au diamètre du segment cylindrique (8) suivant associé à la bague d'étanchéité (3) et inférieur au diamètre d'un logement cylindrique (17) réalisé de façon concentrique au conduit dans l'élément de conduit (15).

3. Disposition selon la revendication 1, caractérisée par le fait que sur le boulon creux fileté (2) est formée une saillie annulaire (14) dont le diamètre intérieur est légèrement supérieur à celui du segment cylindrique de grand diamètre (8) formé sur le manchon à tuyau flexible (1) et dont le diamètre extérieur est inférieur au diamètre du logement (17) concentrique au conduit.

4. Disposition selon l'une quelconque des revendications 1 à 3, caractérisée par le fait qu'elle peut être réalisée comme une unité de montage constituée du manchon à tuyau flexible (1), de la bague d'étanchéité (3) et du boulon creux fileté (2) ainsi que d'une rondelle glissante (4) insérée entre ladite bague d'étanchéité (3) et ledit boulon creux fileté (2) et qui est maintenue au moyen d'un joint torique (5) glissé sur ledit manchon à tuyau flexible (1).

FIG. 2

FIG. 1